# EUROPEAN PATENT SPECIFICATION

(11) **EP 2 139 720 B1**
(45) Date of publication and mention of the grant of the patent: **09.03.2011**
(21) Application number: 08720238.8
(22) Date of filing: 14.02.2008
(51) Int. Cl.: B60P 1/02, B60P 3/08

(54) **VEHICLE STRUCTURE FOR TRANSPORTING VEHICLES AND GOODS**
FAHRZEUGSTRUKTUR ZUM TRANSPORT VON FAHRZEUGEN UND WAREN
STRUCTURE DE VÉHICULE POUR TRANSPORTER DES VÉHICULES ET DES MARCHANDISES

(30) Priority: 30.03.2007 IT TO20070232
(43) Date of publication of application: 06.01.2010
(73) Proprietor: ROLFO S.p.A., 12042 Bra (Cuneo) (IT)
(72) Inventor: GHIRARDO, Giovanni, I-12042 BRA (CN) (IT)
(74) Representative: Garavelli, Paolo
(86) International application number: PCT/IT2008/000090
(87) International publication number: WO 2008/120258

(56) References cited:
- EP-A- 0 233 004
- DE-A1- 19 712 316
- US-B1- 6 368 034

## Description

The present invention refers to a vehicle structure according to the preamble of claim 1, for transporting vehicles and goods, aimed in particular as equipment for road trucks, trailers and semitrailers.

Various types of trucks, trailers and semitrailers are known in the art, equipped according to various arrangement by means of vehicle structures that allow either to transport goods, such as for example inside structures with screens, bodies or cabins, or to transport vehicles, such as for example in case of vehicle-carrier trucks. EP-A-0233004 discloses a vehicle structure according to the preamble of Claim 1.

The prior art however does not propose a vehicle structure adapted as equipment for road trucks, trailers and semitrailers that allows, indifferently, to be able to efficiently and optimally transport both vehicles and goods.

Therefore object of the present invention is solving the above prior art problems by providing a vehicle structure for transporting vehicles and/or goods that allows being a piece of equipment for road trucks, trailers and semitrailers in such a way as to allow, always with the same structure, to transport goods, vehicles or their mixed transport in an efficient and optimum way.

The above and other objects and advantages of the invention, as will appear from the following description, are obtained with a vehicle structure for transporting vehicles and/or goods as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what will be described without departing from the scope of the invention as appears from the enclosed claims.

The present invention will be better described by some preferred embodiments thereof, provided as a non-limiting example, with reference to the enclosed drawing, in which:
- FIG. 1 shows a side view of a road convoy equipped with a preferred embodiment of the vehicle structure for transporting vehicles and/or goods according to the present invention;
- FIG. 2 shows a top view of the road convoy of FIG. 1;
- FIG. 3 shows a top view of the road convoy of FIG. 2 loaded with goods; and
- FIG. 4 shows a side view of the road convoy of FIG. 1 loaded with motor vehicles.

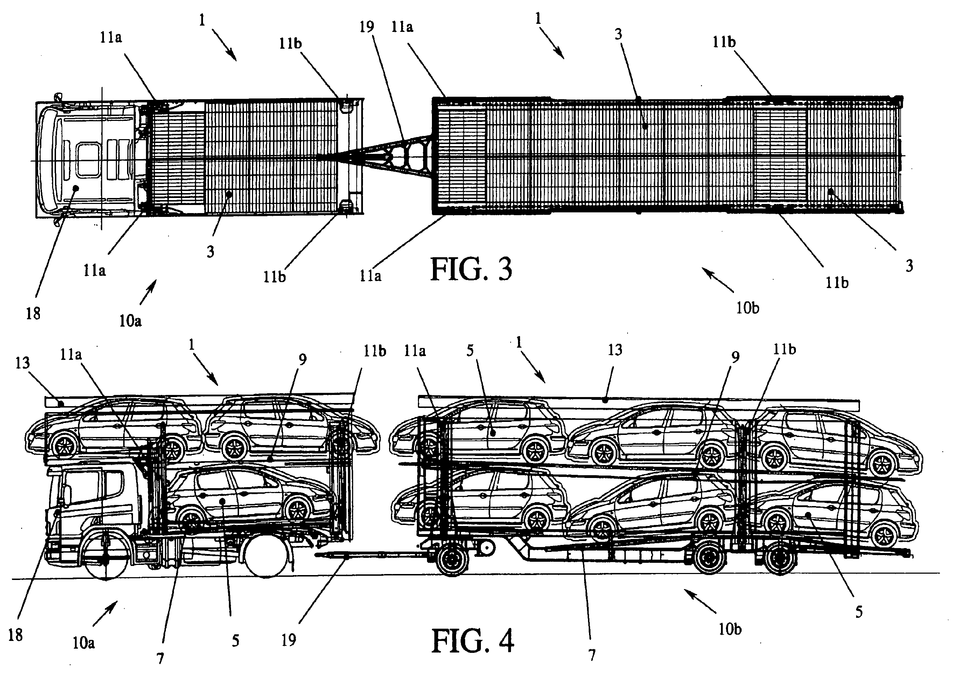

With reference to the Figures, it is possible to note that the vehicle structure 1 according to the present invention allows being a piece of equipment for a truck 10a, a trailer 10b and/or a semitrailer (not shown) for transporting both vehicles 5 (in particular motor vehicles, as shown in FIG. 4) and various goods, also arranged on standard flatbeds (pallets) 3 (as shown, for example, in FIG. 3). For such purpose, the vehicle structure 1 according to the present invention comprises at least one lower flatbed 7 and at least one upper flatbed 9 overlapped to the lower flatbed 7, such upper flatbed 9 being supported by at least one pair of front support risers 11a and by one pair of rear support risers 11b, such risers 11a, 11b having embedded a lifting system that allows lifting and lowering the upper flatbed 9 and adjusting its height with respect to the lower flatbed 7, slanting the upper flatbed 9 with respect to the lower flatbed 7 (for example to allow loading vehicles 5 as already known from the prior art) or, advantageously, also with a lowering and lifting movement of the upper flatbed 9 in a parallel way to the lower flatbed. 7. In particular, one of the two flatbeds 7, 9, but preferably the upper flatbed 9, is characterised in that it is arranged in order to have, when needed, possibly by using adequate moving parts, a plane loading surface suitable to lay on it the goods 3, above all if arranged in pallets.

The same flatbed 7 and/or 9 is equipped with means that make it suitable for loading vehicles 5. These means comprise sliding parts placed on the front and/or rear ends of the flatbed 7 and/or 9 and adapted to increase the available length for loading vehicles 5, to be used as fitting for the passage of vehicles 5 between two possible convoy units 10a, 10b and to facilitate loading the vehicles 5 from the ground. They additionally may comprise as well:
- lanes equipped with anti-skid systems and fasteners for securing the vehicles 5;
- possible ascending or descending ramps or moving parts obtained in the same body of the flatbed 7 and/or 9 whose purpose is improving the exploitation of available spaces when the load is composed of vehicles 5;

The support risers 11a, 11b of the upper flatbed 9 are made with particularly reduced shapes and sizes, in order to obtain, in width, the best useful space possible to be used for loading the goods 3.

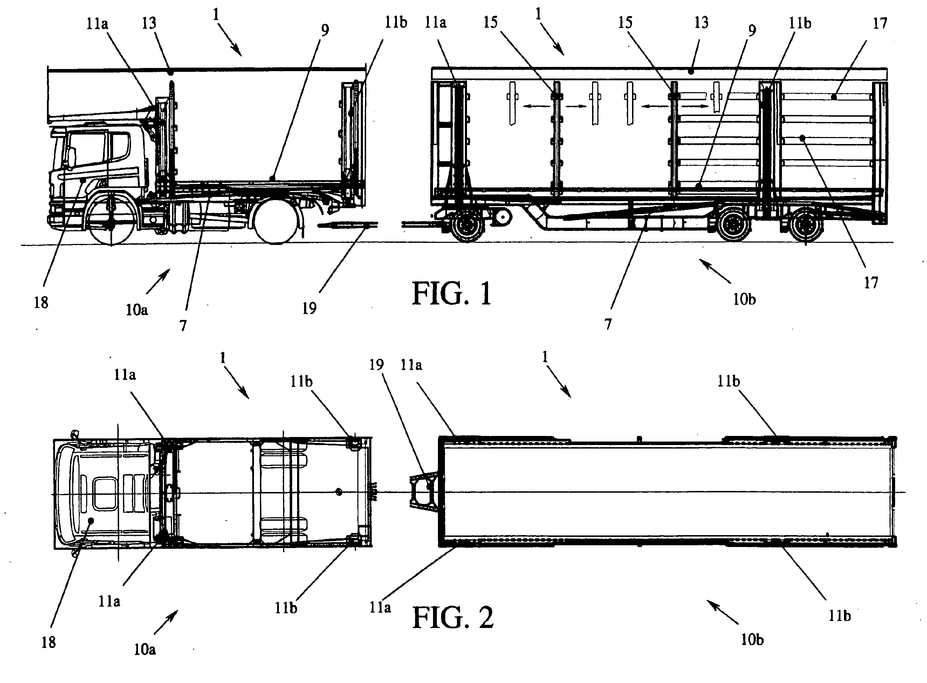

The lifting system of the upper flatbed 9 embedded in the support risers 11a, 11b, when such flatbed 9 is also arranged for loading goods 3, is in turn made in order to allow the same flatbed 9 to be brought, in parallel with the ground, overlapped to the lower flatbed 7 (as shown, for example, in FIG. 1) and to be arranged in the lowest possible position with respect to the ground to facilitate loading goods 3 and maximise the volume useful for loading.

The flatbed 7 or 9 aimed to load vehicles 5 can be made in any one of the known ways in the art for such purpose.

In order to protect from atmospheric agents and/or from introduction of foreign bodies the goods 3 and/or vehicles 5 loaded on the flatbeds 7, 9, the vehicle structure 1 according to the present invention can obviously be equipped with systems for protecting the load areas, that can consist, for example, in:
- padding the lower part of the flatbed 7 and/or 9 aimed for loading goods 3; and/or
- upper cover 13 made of rigid (for example plates) or flexible (screens) material, supported by a suitable substantially known support structure; and/or
- side protection made of flexible (screen) or rigid (various types of panels) material; and/or
- front and rear protection made of flexible (screen) or rigid (doors composed of various panels) material.

In order to allow loading vehicles 5 and exploiting the different maximum heights allowed by regulations in the various Countries related to trucks 10a and trailers 10b or semitrailers, the upper cover 13 can be equipped with a lifting and blocking system in a defined range of positions, made of hydraulic cylinders or other purely mechanical systems.

Advantageously, it can be noted that loading of goods 3 on the vehicle structure 1 can be performed by using common translation and transport means, such as for example lift trucks, both on its rear part and on its side part. In this latter case, for protecting the load on its sides, it can be provided that the side protection system, made as panel or screen, can longitudinally slide with respect to the structure 1, thereby allowing an access to its internal loading space.

In order to laterally contain the load when running the truck 10a, trailer 10b or semitrailer, the vehicle structure 1 can be equipped on its perimeter with an adequate number of vertical side risers 15 (obviously depending on the structure 1 length), connecting the lower parts of the structure 1 with the support structure of the upper cover 13, among which an adequate number of horizontal bars 17 with suitable sizes are arranged, preferably adapted to be disassembled in order to be removed during loading/unloading operations. In a preferred embodiment thereof, the vertical risers 15 are realised in at least two mutually telescopically connected parts, in order to be suited to the different possible heights that the upper cover 13 can assume. Moreover, the same vertical risers 15 can slide and be longitudinally moved with respect to the vehicle structure 1 due to a possible sliding connection in suitable guides at least with the upper cover 13 support structure.

The load containment next to the front and rear walls of the vehicle structure 1, when its protecting system is composed of a screen, is preferably made through an adequate number of horizontal bars (not shown) that can be disassembled and placed between structures placed on the structure 1 angles, in a similar way.to what is provided for side walls and described previously.

The vehicle structure 1 according to the present invention can be used as equipment for a truck 10a, a trailer 10b or a semitrailer; in particular, in case of equipment for a truck 10a, the vehicle structure 1 can be made in order to be both unmovable and unable to be disassembled. Using a vehicle structure 1 of a type that cannot be disassembled, the truck 10a on which it is applied can alternatively be equipped with many structures, even of different types, obviously making its use more versatile and profitable.

The truck 10a can also be equipped with a device for towing a trailer (both of the so-called "integral" type, in which at least one axle is arranged next to its front end and at least another one is arranged mostly towards the rear end, and of the so-called type "with central axle", in which one or more axles are arranged next to the longitudinal center distance of the load space) or a semitrailer.

The vehicle structure 1 according to the present invention, both in its arrangement adapted to be disassembled and in its unmovable arrangement, can obviously be secured onto the vehicle to be equipped in any one of the known methods.

In particular, if the vehicle structure 1 is of the type adapted to be disassembled and is aimed for equipment of a truck 10a originally adapted to tow semitrailers, the vehicle structure 1 according to the present invention can be connected to the truck chassis preferably through a cross member applied onto the longitudinal members of the chassis immediately behind the driving cabin 18, equipped with circular seats with longitudinal horizontal axis, suitable to receive corresponding pins applied onto the front lower end of the vehicle structure 1 and made in order to reduce encumbrances to a minimum; in this case, the towing device is typically made as a coupling fifth wheel, of a conventional type used for towing semitrailers, assembled in the standard position provided for such types of motored vehicles. In this way, it is possible for the truck 10a, if it temporarily lacks the vehicle structure 1, to wholly conventionally engage a semitrailer and then be used in a more profitable way.

The towing device is always preferably arranged in a lowered and advanced position in order to decrease as much as possible the distance between tractor and trailer or semitrailer and therebty maximise, with the same total length of the road convoy, the space used for the load.

If, instead, the vehicle structure 1 used as equipment for the truck 10a if of an unmovable type, the towing device is preferably assembled on a structure integral with the truck chassis.

If instead the vehicle structure 1 is used as equipment for a semitrailer, this latter one will obviously be adapted to be engaged and towed by a tractor for semitrailers, obviously equipped with a coupling fifth wheel for semitrailers having standard characteristics and conventionally assembled in the position provided for towing standard semitrailers.

The trailer 10b, independently from its type (integral or with central axle) can be equipped with an engaging system (drawbar) 19 to a tractor, preferably of a type with variable length to allow easily adapting the convoy length, when it transports vehicles 5, both to the needs of different loads, and to laws in different Countries.

If the vehicle structure 1 according to the present invention is of a type adapted to be disassembled as equipment for a truck 10a, it can be equipped with retractable supports that allow laying it on the ground in a stable position. If the truck 10a on which the vehicle structure 1 is assembled is equipped with a pneumatic suspension on all axles, the detachment and re-attachment operation of the structure could advantageously be performed without the help of external means.

For safety purposes, and upon providing that the convoy travels with a projecting load of vehicles 5 with respect to the rear part of the vehicle structure 1, next to its rear lower end, above all if equipment for a trailer 10a or a semitrailer, a backwards sliding structure can be applied, embedding a bumper device, suitable to prevent other vehicles from being entangled in case of telescoping impacts. Such sliding structure can obviously be placed and blocked in the positions provided by the standards applied in the different Countries.

## Claims

1. Vehicle structure (1) for transporting vehicles (5) and goods (3), in particular as equipment for road vehicles such as trucks (10a), trailers (10b) and semitrailers, comprising at least one lower flatbed (7) and at least one upper flatbed (9) overlapped to said lower flatbed (7), said upper flatbed (9) being supported by at least one pair of front support risers (11a) and by one pair of rear support risers (11b), said risers (11a, 11b) being equipped with a lifting system of said at least one upper flatbed (9) with respect to said at least one lower flatbed (7), at least one of said flatbeds (7, 9) having a plane loading surface for loading said goods (3), said one of said flatbeds (7, 9) being equipped with means adapted to load said vehicles (5), **characterised in that** said means adapted to load said vehicles (5) comprise sliding parts placed on a front and/or rear end of said one of said flatbeds (7, 9) and adapted to increase the available length for loading vehicles (5), to be used as fitting for the passage of vehicles (5) between two road vehicle units (10a, 10b) forming a convoy and to facilitate loading the vehicles (5) from the ground.

2. Vehicle structure (1) according to claim 1, **characterised in that** said lifting system is adapted to provide a lowering and lifting movement to said upper flatbed (9) in a parallel way to said lower flatbed (7).

3. Vehicle structure (1) according to claim 2, **characterised in that** said lifting system is adapted to carry said upper flatbed (9) in parallel with the ground overlapping said lower flatbed (7) in order to be arranged in the lowest possible position to facilitate loading said goods (3) and maximising a useful volume for loading.

4. Vehicle structure (1) according to claim 1, **characterised in that** said one of said flatbeds (7, 9) is said upper flatbed (9).

5. Vehicle structure (1) according to claim 1, **characterised in that** said means adapted to load said vehicles (5) comprise lanes equipped with anti-skid systems and fasteners for securing said vehicles (5).

6. Vehicle structure (1) according to claim 1, **characterised in that** it is equipped with protecting systems adapted to protect said goods (3) and/or said vehicles (5) loaded onto said flatbeds (7, 9) from atmospheric agents and/or the introduction of foreign bodies.

7. Vehicle structure (1) according to claim 6, **characterised in that** said protecting systems comprise: a padding of a lower part of said one of said flatbeds (7, 9) aimed for loading said goods (3), or an upper cover (13) made of rigid or flexible material, or a side protection made of rigid or flexible material, or a front protection and a rear protection made of rigid or flexible material.

8. Vehicle structure (1) according to claim 7 when said protecting systems comprise an upper cover, **characterised in that** said upper cover (13) is equipped with a lifting and blocking system in a defined range of positions.

9. Vehicle structure (1) according to claim 7 when said protecting systems comprise a side protection, **characterised in that** said side protection can longitudinally slide with respect to said structure (1)_{.}

10. Vehicle structure (1) according to claim 7 when said protecting systems comprise an upper cover, **characterised in that** it is equipped on its perimeter with a number of vertical side risers (15) connecting lower parts of said structure (1) with a support structure of said upper cover (13).

11. Vehicle structure (1) according to claim 10, **characterised in that** a number of horizontal bars (17) are arranged between said vertical risers (15).

12. Vehicle structure (1) according to claim 10, **characterised in that** said vertical risers (15) are of a telescopic type.

13. Vehicle structure (1) according to claim 10, **characterised in that** said vertical risers (15) are adapted to longitudinally slide with respect to said structure (1).

14. Vehicle structure (1) according to claim 1, **characterised in that** it is equipped on its rear end with a sliding structure embedding a bumper device.

15. Truck (10a) equipped with a vehicle structure (1) according to any one of claims 1 to 14, **characterised in that** said vehicle structure (1) is connected to a chassis of said truck (10a) through a cross member applied to longitudinal members of said chassis immediately behind a driving cabin (18), said cross member being equipped with circular seats with longitudinal horizontal axis adapted to receive corresponding pins applied on a front lower end of said structure (1).

## Patentansprüche

1. Fahrzeugstruktur (1) für den Transport von Fahrzeugen (5) und Waren (3), insbesondere für die Ausrüstung von Straßenfahrzeugen wie Lastkraftwagen (10a), Anhängern (10b) und Sattelanhängern, mit mindestens einem unteren Flachboden (7) und mindestens einem oberen Flachboden (9), der über dem genannten unteren Flachboden (7) liegt, der genannte obere Flachboden (9) wird durch mindestens ein Paar vorderer Stützpfosten (11a) und ein Paar hinterer Stützpfosten (11b) getragen, die genannten Pfosten (11a, 11b) sind mit einem Hubsystem von mindestens einem genannten Flachboden (9) hinsichtlich von mindestens einem unteren Flachboden (7) ausgestattet, mindestens einer der genannten Flachböden (7, 9) hat eine flache Ladefläche für die Ladung der genannten Ware (3), einer der genannten Flachböden (7, 9) ist mit Vorrichtungen ausgestattet, die für die Ladung der genannten Fahrzeuge (5) dienen, die Ladefläche ist **dadurch gekennzeichnet, dass** die genannten Ladevorrichtungen der genannten Fahrzeuge (5) gleitende Bauteile enthalten, die an einem vorderen und/oder hinteren Endstück von einem der genannten Flachböden (7, 9) angebracht sind und dazu dienen, die verfügbare Länge für die Ladung der Fahrzeuge (5) zu vergrößern, als Anschluss für die Durchfahrt der Fahrzeuge (5) zwischen den beiden Einheiten der Straßenfahrzeuge (10a, 10b), die einen Schleppzug bilden, und zur Vereinfachung der Ladung der Fahrzeuge (5) vom Boden zu dienen.

2. Fahrzeugstruktur (1) gemäß Patentanspruch 1, die **dadurch gekennzeichnet ist, dass** das genannte Hubsystem dazu dient, dem genannten oberen Flachboden (9) parallel zum genannten unteren Flachboden (7) eine Senk- und Hubbewegung zu verleihen.

3. Fahrzeugstruktur (1) gemäß Patentanspruch 2, die **dadurch gekennzeichnet ist, dass** das genannte Hubsystem dazu dient, den genannten oberen Flachboden (9) parallel zum Boden über den genannten unteren Flachboden (7) zu führen, um sich auf der ganz unteren Position zu positionieren, damit die Ladung der genannten Ware (3) zu vereinfacht und ein nutzbares Volumen für die Ladung zu optimiert wird.

4. Fahrzeugstruktur (1) gemäß Patentanspruch 1, die **dadurch gekennzeichnet ist, dass** einer der genannten Flachböden (7, 9) der genannte obere Flachboden (9) ist.

5. Fahrzeugstruktur (1) gemäß Patentanspruch 1, die **dadurch gekennzeichnet ist, dass** die genannten Ladevorrichtungen der genannten Fahrzeuge (5) Fahrspuren enthalten, die mit Gleitschutzystemen und Kupplungen für eine Befestigung der genannten Fahrzeuge (5) ausgestattet sind.

6. Fahrzeugstruktur (1) gemäß Patentanspruch 1, die **dadurch gekennzeichnet ist, dass** sie mit Schutzsystemen ausgestattet ist, die dazu dienen, die genannte Ware (3) und/oder die genannten Fahrzeuge (5), die auf den genannten Flachböden (7, 9) geladen sind, vor Witterungseinflüssen und/oder der Einführung von Fremdkörpern zu schützen.

7. Fahrzeugstruktur (1) gemäß Patentanspruch 6, die **dadurch gekennzeichnet ist, dass** die genannten Schutzsysteme eine Abdichtung eines unteren Teils von einem der genannten Flachböden (7, 9), der für die Ladung der genannten Ware (3) bestimmt ist, oder eine obere Abdeckung (13) aus festem oder biegsamem Material, oder einen Seitenschutz aus biegsamem oder festem Material, oder einen vorderen und hinteren Schutz aus biegsamem oder festem Material einschließen.

8. Fahrzeugstruktur (1) gemäß Patentanspruch 7, wenn die genannten Schutzsysteme eine obere Abdeckung einschließen, die **dadurch gekennzeichnet ist, dass** die genannte obere Abdeckung (13) mit einem Hubsystem und einer Blockierung in einem von Positionen festgelegten Intervall ausgestattet ist.

9. Fahrzeugstruktur (1) gemäß Patentanspruch 7, wenn die genannten Schutzsysteme einen Seitenschutz einschließen, die **dadurch gekennzeichnet ist, dass** der genannte Seitenschutz in Längsrichtung zur genannten Struktur (1) gleiten kann.

10. Fahrzeugstruktur (1) gemäß Patentanspruch 7, wenn die genannten Schutzsysteme eine obere Abdeckung einschließen, die **dadurch gekennzeichnet ist, dass** sie am Umfang mit einer gewissen Anzahl von vertikalen Seitenpfosten (15) ausgestattet ist, die untere Bauteile der genannten Struktur (1) mit einer Stützstruktur der genannten oberen Abdeckung (13) verbinden.

11. Fahrzeugstruktur (1) gemäß Patentanspruch 10, die **dadurch gekennzeichnet ist, dass** zwischen den genannten vertikalen Pfosten (15) eine gewisse Anzahl von horizontalen Stangen (17) angebracht ist.

12. Fahrzeugstruktur (1) gemäß Patentanspruch 10, die **dadurch gekennzeichnet ist, dass** die genannten vertikalen Pfosten (15) teleskopisch sind.

13. Fahrzeugstruktur (1) gemäß Patentanspruch 10, die **dadurch gekennzeichnet ist, dass** die genannten vertikalen Pfosten (15) dazu dienen, in Längsrichtung zur genannten Struktur (1) zu gleiten.

14. Fahrzeugstruktur (1) gemäß Patentanspruch 1, die **dadurch gekennzeichnet ist, dass** sie an einem ihrer hinteren Endstücke mit einer Gleitstruktur ausgestattet ist, die eine Stoßstange enthält.

15. Lastkraftwagen (10a), der mit einer Fahrzeugstruktur (1) gemäß einem beliebigen der Patentansprüche von 1 bis 14 ausgestattet und **dadurch gekennzeichnet ist, dass** die genannte Fahrzeugstruktur (1) mit einem Gestell des genannten Lastkraftwagens (10a) durch einen Querträger verbunden ist, der an Längsträgern des genannten Gestells gleich hinter einem Fahrerhaus (18) befestigt ist, der genannte Querträger ist mit kreisförmigen Aufnahmen mit horizontaler Längsachse ausgestattet, die dazu dienen, die entsprechenden Bolzen aufzunehmen, die an einem unteren vorderen Endstück der genannten Struktur (1) befestigt sind.

## Revendications

1. Structure véhiculaire (1) pour le transport des véhicules (5) et des marchandises (3), en particulier pour l'arrangement de véhicules routiers comme les camions (10a), les remorques (10b) et les semi-remorques routiers, comprenant au moins une plate-forme inférieure (7) et au moins une plate-forme supérieure (9) superposée à ladite une plate-forme inférieure (7), ladite plate-forme supérieure (9) étant supportée par au moins une paire de montants de support avant (11a) et par une paire de montants de support arrière (11b), lesdits montants (11a, 11b) étant munis d'un système de levage de ladite au moins une plate-forme supérieure (9) par rapport à ladite au moins plate-forme inférieure (7) ; au moins une des deux plates-formes susdites (7, 9) ayant une surface de chargement plate pour le chargement de ladite marchandise (3), une des deux plates-formes susdites (7, 9) étant munie de moyens pour le chargement desdits véhicules (5), **caractérisée en ce que** les moyens pour le chargement desdits véhicules (5) comprennent des parties coulissantes sur une extrémité AV et/ou AR d'au moins une desdites plates-formes (7, 9) servant à augmenter la longueur utile pour le chargement des véhicules (5), à servir de raccord pour le passage des véhicules (5) entre deux unités de véhicules routiers (10a, 10b) pour former ainsi un convoi et pour faciliter le chargement au sol de ces mêmes véhicules (5).

2. Structure véhiculaire (1) selon la revendication 1, **caractérisée en ce que** ledit système de levage est capable d'attribuer un mouvement d'abaissement et de levage à ladite plate-forme supérieure (9) parallèlement à ladite plate-forme inférieure (7).

3. Structure véhiculaire (1) selon la revendication 2, **caractérisée en ce que** ledit système de levage est capable d'amener ladite plate-forme supérieure (9) parallèlement au sol en parfaite superposition à ladite plate-forme inférieure (7) pour se placer dans la plus basse position possible dans le but de faciliter le chargement de ladite marchandise (3) et de maximiser le volume utile au chargement.

4. Structure véhiculaire (1) selon la revendication 1, **caractérisée en ce que** ladite au moins une desdites plates-formes (7, 9) est ladite plate-forme supérieure (9).

5. Structure véhiculaire (1) selon la revendication 1, **caractérisée en ce que** lesdits moyens pour le chargement desdits véhicules (5) comprennent des voies équipées de systèmes anti-dérapage et d'attaches pour la fixation desdits véhicules (5).

6. Structure véhiculaire (1) selon la revendication 1, **caractérisée en ce qu'**elle est équipée de systèmes de protection capables de protéger ladite marchandise (3) et/ou lesdits véhicules (5) chargés sur lesdites plates-formes (7, 9) contre les agents atmosphériques et/ou la pénétration de corps étrangers.

7. Structure véhiculaire (1) selon la revendication 6, **caractérisée en ce que** lesdits systèmes de protection comprennent un tamponnement d'une partie inférieure d'une desdites plates-formes 7, 9) destiné au chargement de ladite marchandise (3), ou bien une couverture supérieure (13) en matière rigide ou souple ou une protection latérale en matière souple ou rigide ou encore une protection avant et une protection arrière toujours en matière souple ou raide.

8. Structure véhiculaire (1) selon la revendication 7, lorsque lesdits systèmes de protection comprennent une couverture supérieure, **caractérisée en ce que** ladite couverture supérieure (13) est munie d'un système de levage et de blocage dans un intervalle de positions bien définies.

9. Structure véhiculaire (1) selon la revendication 7, lorsque lesdits systèmes de protection comprennent une protection latérale, **caractérisée en ce que** ladite protection latérale peut coulisser dans le sens longitudinal par rapport à ladite structure (1).

10. Structure véhiculaire (1) selon la revendication 7, lorsque lesdits systèmes de protection comprennent une couverture supérieure, **caractérisée en ce qu'**elle possède, tout au long de son périmètre, un certain nombre de montants latéraux verticaux (15) reliant les parties inférieures de ladite structure (1) à une structure de soutien de ladite couverte supérieure (13).

11. Structure véhiculaire (1) selon la revendication 10, **caractérisée en ce que** entre lesdits montants verticaux (15) sont présentes un certain nombre de barres horizontales (17).

12. Structure véhiculaire (1) selon la revendication 10, **caractérisée en ce que** lesdits montants verticaux (15) sont du type télescopique.

13. Structure véhiculaire (1) selon la revendication 10, **caractérisée en ce que** lesdits montants verticaux (15) sont agencés pour coulisser dans le sens longitudinal par rapport à ladite structure (1).

14. Structure véhiculaire (1) selon la revendication 1, **caractérisée en ce qu'**elle possède, à une de ses extrémités arrière, une structure coulissante incorporant un dispositif pare-chocs.

15. Camion (10a) équipé d'une structure véhiculaire (1) selon une quelconque des revendications de 1 à 14, **caractérisée en ce que** ladite structure véhiculaire (1) est reliée à un châssis dudit camion (10a) par l'intermédiaire d'une traverse appliquée aux longerons de ce même châssis installé immédiatement derrière une cabine de conduite (18), ladite traverse étant munie de sièges circulaires avec axe horizontal longitudinal et capables de recevoir des axes correspondants appliqués sur une extrémité avant inférieure de ladite structure (1).
